# EUROPÄISCHE PATENTSCHRIFT

(11) **EP 1 451 040 B1**
(45) Veröffentlichungstag und Bekanntmachung des Hinweises auf die Patenterteilung: **30.08.2006**
(21) Anmeldenummer: 02804170.5
(22) Anmeldetag: 18.10.2002
(51) Int. Cl.: B60R 16/02, G06F 9/38, G06F 17/50

(54) **STEUERVORRICHTUNG**
CONTROL DEVICE
DISPOSITIF DE COMMANDE

(30) Priorität: 04.12.2001 DE 10159480
(43) Veröffentlichungstag der Anmeldung: 01.09.2004
(73) Patentinhaber: DaimlerChrysler AG, 70567 Stuttgart (DE)
(72) Erfinder: FORCHERT, Thomas, 70563 Stuttgart (DE); LUKA, Jürgen, 71732 Tamm (DE); VIEWEGER, Wolfgang, 72631 Aichtal-Aich (DE)
(86) Internationale Anmeldenummer: PCT/EP2002/011681
(87) Internationale Veröffentlichungsnummer: WO 2003/047913

(56) Entgegenhaltungen:
- CN-A- 1 360 440
- DE-A- 19 750 662
- DE-A- 19 925 018

## Beschreibung

Die Erfindung betrifft eine Vorrichtung zum Steuern von Maschinen oder Verkehrsmitteln, mit einer Recheneinheit zur Abarbeitung von Steuerprogrammen, mit Speichermitteln zur Speicherung von Daten bzw. Steuerprogrammen und mit Schnittstellenbausteinen, über die Steuerbefehle an die zu steuernden Aktoren oder auch an weitere Steuervorrichtungen übertragen werden, wobei die Vorrichtung über einen Datenbus mit anderen Steuervorrichtungen verbunden ist.

Aus der DE 197 50 662 A1 (Oberbegriff der Ansprüche 1 und 2) ist eine Standardrechnereinheit mit einem Mikroprozessor bekannt. Die Standardrechnereinheit ist zum Einsatz innerhalb eines Fahrzeugsteuergerätes vorgesehen, um dort verschiedene Steuerprozesse, beispielsweise die Motorsteuerung, durchzuführen. Dabei ist vorgesehen, dass der Mikroprozessor skalierbar ist, d.h. zu jedem Mikroprozessor sind mehrere unterschiedlich leistungsfähige Mikroprozessorvarianten bei gleicher Anschluss-Pin-Belegung vorgesehen, so dass je nach Leistungsbedarf ein geeigneter Mikroprozessor im Steuergerät einsetzbar ist. Wird bei einer Anwendung im Verkehrsmittel eine höhere Leistungsfähigkeit erforderlich, soll durch einfachen Prozessortausch, ohne dabei die Peripheriebauteile zu verändern, ein schnellerer Mikroprozessor eingesetzt werden. Der Vorteil bei einer derartigen Standardrechnereinheit besteht darin, dass im Verkehrsmittel nicht für jede Steueranwendung ein anderes Steuergerät eingesetzt werden muss, sondern dass die gleiche Hardware lediglich durch Tausch eines leistungsfähigeren Prozessors auch für komplexere Steueraufgaben einsetzbar ist. Je nach Anwendung läuft dann auf der Standardrechnereinheit eine andere Steuersoftware.

Es sind außerdem diverse Anwendungen mit rekonfigurierbarer Hardware bekannt. Unter rekonfigurierbarer Hardware wird ein Hardwarebaustein verstanden, der aus einer Anzahl von einzelnen Speicherzellen besteht, die beliebig elektrisch leitend verbunden werden können. Auf diese Weise können beispielsweise logische Bausteine Speichermittel und Addierer konfiguriert werden, wobei der Baustein auf der Platine eingebaut beleibt. Werden andere Bausteine benötigt, lässt sich die Hardware rekonfigurieren, so dass dieselbe Hardware, durch geänderte Verbindung der Speicherzellen untereinander, bspw. ein Speichermittel bildet.

Ein Beispiel für heute im Einsatz befindliche rekonfigurierbare Hardware stellen die Field Programmable Gate Arrays (FPGA) dar, die bei Anwendungen im Zusammenhang mit PC-Systemen auch schon im praktischen Einsatz sind. Lediglich beispielhaft wird hier auf die Offenbarung der Patente EP 177261 B1, EP 463026 B1, EP 642094 A2 und US 5,570,039 verwiesen. Ein Einsatz bei vernetzten Steuergeräten, wie diese bei Verkehrsmitteln üblich sind, ist im Stand der Technik bisher nicht angedacht.

Es ist Aufgabe der vorliegenden Erfindung, eine vernetzte Vorrichtung zum Steuern von Maschinen oder Verkehrsmitteln bereitzustellen, die alternativ zu der bereits bekannten skalierbaren Standardrecheneinheit eingesetzt werden kann.

Diese Aufgabe wird durch die Merkmale des Anspruchs 1 gelöst. Danach weist die Vorrichtung mehrere gleichartige Zellen auf, wobei jede Zelle eine rekonfigurierbare Hardware sowie eine Zellenkommunikationseinheit aufweist, und diese Zellen sind durch Konfigurationsdaten umkonfigurierbar, so dass jede Zelle für den Steuerprozess in Bezug auf deren Hardwarebeschaltung anpassbar ist und eine oder mehrere Zellen zusammen eine Recheneinheit und/oder Peripheriebausteine bilden.

Die Vorrichtung zum Steuern soll erfindungsgemäß innerhalb einer Maschine oder eines Verkehrsmittels zusammen mit weiteren Steuervorrichtungen eingesetzt werden, die untereinander jeweils über einen Datenbus oder sonstige Leitungen vernetzt sind. Durch den Einsatz einer rekonfigurierbaren Hardware, beispielsweise eines field programable gate arrays (FPGA), kann im Gegensatz zu herkömmlichen Systemen, bei denen lediglich eine neue Software aufgespielt wird, auch die Hardwarekonfiguration der bestehenden rekonfigurierbaren Hardware eines Steuergerätes verändert werden. Durch den Aufbau der Vorrichtung mittels mehrerer gleichartiger Zellen, kann jede Zelle für sich durch Konfigurationsdaten neu konfiguriert werden. Die Zellen untereinander sind innerhalb der Vorrichtung ebenfalls vernetzt, beispielsweise durch einen internen Bus der Vorrichtung. Die aus den einzelnen Zellen aufgebaute Vorrichtung ist dann extern, wie bereits beschrieben, über den Datenbus mit weiteren Steuergeräten vernetzt. Durch den internen zellularen Aufbau kann die Vorrichtung pro Zelle separat konfiguriert werden, so dass jede Zelle eine eigene Steuerfunktion übernehmen kann. Auf diese Weise kann die Vorrichtung die konventionellen Aufgaben eines Steuergeräts entweder teilweise oder insgesamt ersetzen.

Die Vorrichtung ist erfindungsgemäß durch Zellen aufgebaut, die als rekonfigurierbare Hardware bspw. FPGA's enthalten, die wiederum aus einzelnen Speicherzellen bestehen. Die Speicherzellen der rekonfigurierbaren Hardware sind bevorzugt auf einem Chip vorgesehen und können durch elektronische Signale neu konfiguriert werden, so dass eine neue interne Verdrahtung der Speicherzellen konfiguriert ist. Wird eine andere logische Schaltung erforderlich, kann dann der FPGA-Baustein einfach neu rekonfiguriert werden.

Im Gegensatz dazu sind die Zellen der Vorrichtung fest verdrahtet und bilden jeweils eine übergeordnete Einheit mit auf eine spezifische Technik bezogenen Aufgaben. Eine erste Zelle kann Steueraufgaben für die Motorelektronik übernehmen, wobei im FPGA eine Recheneinheit, ein Speicherbaustein und eine Zellenkommunikationseinheit konfiguriert sind. Durch eine zweite Zelle kann dann das Fahrerinformationssystem angesteuert werden, wozu ein logischer Addierer und Speichereinheiten in dem FPGA konfiguriert sind. Daneben können in der zweiten Zelle noch ein Mikrorechner und Schnittstellenbausteine zum Datenbus vorgesehen sein, die dann als herkömmliche Elektronikbauteile vorgesehen sind.

Ein besonderer Vorteil der erfindungsgemäßen Vorrichtung besteht darin, dass eine Standardsteuervorrichtung mit unabhängigen rekonfigurierbaren Zellen entsteht, die vor ihrem Einsatz über Konfigurationsdaten entsprechend der Steueraufgabe neu konfiguriert werden können. Es können dabei einerseits bestehende Steuergeräte bezogen auf deren Hardwareausprägungen nachgebildet werden, so dass die Vorrichtung als Ersatzteil-Steuergerät konfiguriert werden kann, nachdem beispielsweise ein herkömmlicher Mikroprozessor von dessen Hersteller nicht mehr produziert wird. Andererseits kann diese Standard-Steuereinrichtung auch bei Steuerprozessen eingesetzt werden, die aufgrund einer geringen Stückzahl die Herstellung eines neuen konventionellen Steuergerätes nicht rechtfertigen. Der besondere Vorzug der erfindungsgemäßen Vorrichtung besteht jedoch darin, dass die Vorrichtung zum Steuern beliebig skalierbar ausgestaltet sein kann, d.h. die Zellen können in Form von Einzelbausteinen mit der notwendigen Peripherie ausgebildet sein und je nach Bedarf an eine vorhandene Schnittstelle am internen Bus der Vorrichtung angekoppelt werden. Dadurch kann bei Einsatz eines neuen Systems, beispielsweise eines neuen Fahrerinformationssystems, eine weitere Zelle an die Vorrichtung zum Steuern angekoppelt werden und durch Herunterladen von Konfigurationsdaten in einer Hardwarebeschreibungssprache neu rekonfiguriert werden.

Eine alternative Methode besteht darin, dass die Funktionen einer Recheneinheit oder einer Treibereinheit mittels Hardwarebeschreibungssprache auf die rekonfigurierbare Hardware heruntergeladen wird, so dass ein klassisches Programm, bspw. in C oder Java, realisiert werden kann, das dann auf dieser konfigurierten Hardware ausführbar ist. Auf diese Weise kann die Hardware eines bestehenden Kraftfahrzeugs nachträglich durch ankoppeln einer neuen Zelle mit rekonfigurierbarer Hardware und den dazu gehörenden Peripheriebausteinen aufgerüstet werden.

Bevorzugt weist die Vorrichtung eine fest vorgegebene Anzahl der Zellen auf, wobei jede Zelle eine rekonfigurierbare Hardware sowie die dazu notwendigen Peripheriebausteine aufweist. Die Zellen können untereinander durch den internen Bus vernetzt sein und beliebig beschaltet werden. Die Konfigurationsdaten können in Form einer Hardwarebeschreibungssprache die erforderliche Hardwarekonfiguration angeben. Dazu kann einerseits ein Mikrorechnerbereich oder ein Schnittstellenbaustein hardwaremäßig nachgebildet werden. Andererseits kann aber auch aus der fest vorgegebenen Anzahl der auf der Platine der Vorrichtung vorgesehenen Zellen eine Untermenge auswählbar sein, die dann über die Konfigurationsdaten geeignet beschaltet werden. Eine erhöhte Rechenleistung, d.h. das Skalieren des Prozessors, wird dann durch Hinzufügen und Rekonfigurieren weiterer Zellen erreicht. Die Konfigurationsdaten in Form einer Hardwarebeschreibungssprache (hardware description language, HDL) können über eine erste Schnittstelle zur Vorrichtung und über die internen Schnittstellen auf die jeweilige Zelle übertragen werden, so dass jede Zelle separat oder nur ausgewählte Zellgruppen konfiguriert werden können. In einer Datenbank können dann mehrere Konfigurationsdatensätze abgelegt sein, so dass die Hardware in Abhängigkeit von den erforderlichen Steuerprozessen konfigurierbar ist.

Jede Zelle kann als separates Bauteil ausgeführt sein, wobei mindestens eine rekonfigurierbare Hardware und die für die Vernetzung der Zellen erforderlichen Peripheriebausteine vorhanden sein müssen. Peripheriebausteine sind bspw. Schnittstellen für einen internen, die Zellen untereinander verbindenden Datenbus der Vorrichtung, Timer- und Interrupt-Bausteine. Zusätzlich kann dann noch ein konventioneller Mikroprozessor bzw. Mikrokontroller in jeder Zelle vorgesehen sein. Der Vorteil der erfindungsgemäßen Vorrichtung besteht darin, dass die Anzahl der im Fahrzeug vorhandenen Steuergeräte durch die skalierbare Vorrichtung verringert werden kann. Die Hardware kann rekonfiguriert werden, so dass auch mehrere unterschiedliche Steuerungsprozesse auf einer einzigen Vorrichtung zum Steuern ausgeführt werden. Durch die erfindungsgemäße Vorrichtung zum Steuern kann ein skalierbares Standardsteuergerät mittels rekonfigurierbarer Hardware erzeugt werden und die zugehörige Software wird auf die so erzeugte Hardware aufgespielt.

Die Hardware ist mittels Rekonfiguration durch eine Hardwarebeschreibungssprache anpassbar, um bestimmte Hardwarebausteine durch FPGA-Bausteine nachzubilden. Die Nachbildung der Hardware eines Steuergeräts kann soweit gehen, dass Steuerungsfunktionen auch ohne den üblicherweise vorhandenen Mikrokontroller direkt als Hardwarekonfiguration dargestellt werden können. Die benötigte Rechenleistung bzw. die erforderlichen Speicher- und Peripheriebausteine können durch Konfiguration ein oder mehrerer Zellen und deren Vernetzung untereinander erstellt werden. Durch die Flexibilität bei der Hardwarekonfiguration ist eine hohe Anzahl von Fahrzeugfunktionen innerhalb einer Vorrichtung abbildbar. Der Vernetzungsgrad der einzelnen Zellen innerhalb der Vorrichtung hängt von der Komplexität der konfigurierten Hardware bzw. von den sicherheitsbedingten Redundanzerfordernissen ab. Beispielsweise kann vorgesehen sein, dass zur Erhöhung der Sicherheit eine weitere Zelle zur Überprüfung eines Steuerungsprozesses vorgesehen ist und diese mit den bisher benötigten Zellen über den internen Bus vernetzt wird.

Bei einer bevorzugten Weiterbildung der Erfindung ist mindestens eine der Zellen mit einer rekonfigurierbaren Hardware ausgestattet, die die Berechnungsfunktionen eines Mikrokontrollers übernehmen kann. Die Vorrichtung kann dadurch ganz oder teilweise ein herkömmliches Steuergerät mit einem Mikrokontroller ersetzen. Auf diese Weise kann die rekonfigurierbare Hardware, beispielsweise ein FPGA, durch die Hardwarebeschreibungssprache so konfiguriert werden, dass ein Berechnungsprozess für eine Steuerfunktion nachgebildet wird. Das FPGA kann zum Beispiel einen Addierer und Multiplizierglieder ausbilden, um komplexe Rechenaufgaben durchzuführen. Diese Steuerfunktion kann dann bei einem herkömmlichen Steuergerät entfallen und ausgelagert werden oder das konventionelle Steuergerät entfällt insgesamt.

Bevorzugt werden die Zellen der Vorrichtung durch Herunterladen einer Hardwarebeschreibungssprache konfiguriert und jede Zelle wird zur Ausführung einer oder mehrerer spezieller Steuerungsfunktionen konfiguriert. Bei einem höheren Rechenbedarf ist die Vorrichtung auf einfache Weise skalierbar, indem eine oder mehrere Zellen zusätzlich hinzugefügt und/oder über die Hardwarebeschreibungssprache aktiviert werden, so dass die neuen Zellen dann zusätzliche Rechenaufgaben abarbeiten können. Die Vorrichtung zum Steuern eignet sich daher insbesondere für Anwendungen in kleiner Stückzahl, wenn eine besonders hohe Anpassungsfähigkeit der Rechenleistung erforderlich ist. Dazu gehören insbesondere der Ersatzteilebedarf bei Steuergeräten oder das spätere Hinzufügen von Zusatzfunktionen zu einem bereits bestehenden Steuergerät. Die zusätzliche Funktion wird dann über die Hardwarebeschreibungssprache in Bezug auf die erforderliche Hardware bereitgestellt, so dass die zusätzlich heruntergeladene Software auf dieser konfigurierten Hardware einsatzfähig ist.

Die Vorrichtung zum Steuern ist insbesondere als Austauschsteuergerät einsetzbar. Bei einer Weiterbildung der Erfindung sind die Zellen untereinander durch einen internen optischen oder elektrischen Datenbus oder eine drahtlose Schnittstelle, insbesondere eine Funkschnittstelle, vernetzt. Rekonfigurierbare Hardware ist dabei derart beschaltbar, dass die Peripheriebausteine einer Zelle als Schnittstelle für den internen Bus programmiert werden können. Ferner kann jede Zelle auch eine Schnittstelle zum externen Datenbus aufweisen, der die Vorrichtungen zum Steuern, d.h. die Steuergeräte, untereinander verbindet.

Es gibt nun verschiedene Möglichkeiten, die Lehre der vorliegenden Erfindung in vorteilhafter Weise auszugestalten und weiterzubilden. Dazu ist einerseits auf die untergeordneten Ansprüche und andererseits auf die nachfolgende Erläuterung einer Ausführungsform zu verweisen.

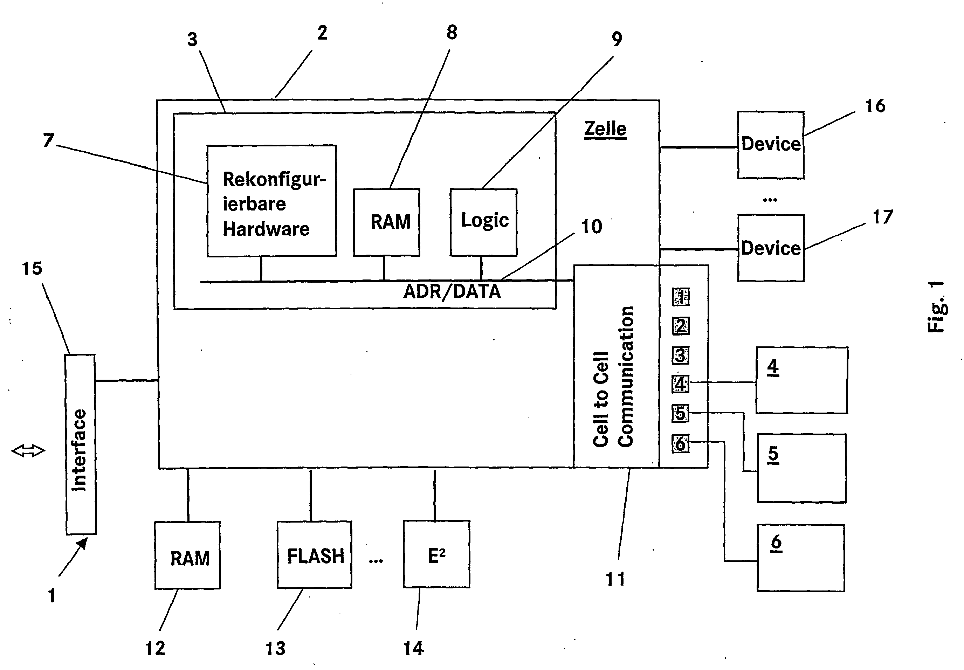

Die einzige Figur zeigt eine Ausführungsform einer Zelle der erfindungsgemäßen Vorrichtung zum Steuern von Komponenten eines Kraftfahrzeugs.

Die Vorrichtung 1 zum Steuern von Komponenten eines Kraftfahrzeugs weist eine Recheneinheit 2 zur Abarbeitung von Steuerprogrammen auf, die aus einer oder mehreren Zellen 3, 4, 5, 6 aufgebaut ist. Jede Zelle 3, 4, 5, 6 weist eine rekonfigurierbare Hardware 7, insbesondere ein FPGA-Baustein, und Speicher- 8 sowie Logikeinheiten 9 auf. Die Speichereinheit 8 sowie die Logikeinheit 9 bilden Peripheriebausteine der Zelle 3, die einerseits zur Speicherung der Daten bzw. Steuerprogramme und andererseits zur Bereitstellung der Steuerbefehle oder der Ausgabe der Daten auf den internen Datenbus 10 vorgesehen sind.

Der interne Datenbus 10 ist mit einer Zellenkommunikationseinheit 11 verbunden, die die Kommunikation der Zellen 3, 4, 5, 6 untereinander über den internen Datenbus 10 steuert. Die Zellenkommunikationseinheit 11 kann wiederum durch eine rekonfigurierbare Hardware aufgebaut sein. Die Vorrichtung 1 zum Steuern weist weitere Speichereinheiten 12, 13 und 14 auf, die unter anderem dazu dienen, dass über das externe Interface 15, beispielsweise über eine drahtlose Schnittstelle oder einen Datenbus, heruntergeladene Konfigurationsdaten gespeichert werden können. Bevorzugt können Konfigurationsdaten von einer anderen Steuervorrichtung über das Interface 15 im Flash-Speicher 13 abgelegt werden und diese Konfigurationsdaten weisen eine Hardwarebeschreibungssprache auf, über die die rekonfigurierbare Hardware 7 neu beschaltbar ist. Wenn die rekonfigurierbare Hardware 7 ein FPGA-Baustein ist, besteht dieser aus vielen Speicherzellen, die über variable Verbindungsleitungen miteinander unterschiedlich verbunden werden können. Je nach Verbindungsmuster ergibt sich dann ein anderer Hardwarebaustein. Beispielsweise kann ein Addierer oder ein Speichermittel oder ein Logikbaustein durch die Hardwarebeschreibungssprache konfiguriert werden.

Im Rekonfigurationsprozess wird dann die Hardwarebeschreibungssprache jeweils der betreffenden Zelle 3, 4, 5, 6 zugeordnet, so dass diese in Bezug auf deren Hardware neu rekonfiguriert wird. Ebenfalls über das Interface 15 kann dann auch die Software heruntergeladen werden und in einem der Speicherbausteine 12, 13, 14 abgelegt werden, so dass jeder Zelle 3, 4, 5, 6 auch die entsprechende Software zugeordnet wird, um einen Steuerprozess mit den erforderlichen Funktionen ausführen zu können.

Mit der Vorrichtung 1 oder direkt mit der Zelle 3 sind Aktoren und/oder Sensoren 16, 17 verbunden, die durch die Vorrichtung 1 gesteuert werden. Beispielsweise handelt es sich dabei um Aktoren, wie elektrisch betätigbare Steuerventile, die bei der Motorsteuerung von Kraftfahrzeugen eingesetzt werden. Der Sensor 16 erfasst Daten, beispielsweise die Motortemperatur oder eine Drehzahl, die zur Durchführung des Steuerprozesses erforderlich sind.

Die Vorrichtung 1 zum Steuern ist aus mehreren gleichartigen Zellen 3, 4, 5, 6 aufgebaut, die untereinander über den Zellenkommunikationseinheit 11 und den internen Datenbus 10 verbunden sind. Die Zellen können zur seriellen bzw. parallelen Bearbeitung durch den Zellenkommunikationseinheit 11 flexibel verdrahtet werden. Dazu kann auch hier ein FPGA-Baustein, der programmierbar in Bezug auf die Verbindungen ist, eingesetzt werden. Jede Zelle 3, 4, 5, 6 oder auch nur bestimmte Zellenkommunikationseinheit, sind über das Interface 15 mit einem externen Datenbus mit weiteren Steuergeräten innerhalb des Verkehrsmittel verbunden. Dazu sind verschiedene Datenbusschnittstellen erforderlich, beispielsweise eine CAN-Schnittstelle oder eine Schnittstelle zu einem optischen Datenbus, der dann die verschiedenen Steuervorrichtungen miteinander verbindet. In jeder der Zellen 3, 4, 5, 6 ist eine Zellenkommunikationseinheit 11 vorgesehen, die wiederum selbst eine rekonfigurierbare Hardware sein kann.

Durch den zellularen Aufbau der Vorrichtung 1 zum Steuern von Maschinen oder Verkehrsmitteln und der rekonfigurierbaren Hardware 7 können je nach Anwendung verschiedenen Zellen 3, 4, 5, 6 unterschiedliche Funktionen zugewiesen werden. Es kann bei den Zellen 3, 4, 5, 6 zu einer Spezialisierung hinsichtlich der Steuerfunktionen kommen und eine Skalierbarkeit, d.h. die Erhöhung der Rechenleistung kann durch nachträgliches Hinzufügen einer weiteren Zelle erfolgen. Die nachträgliche Skalierbarkeit, beispielsweise wenn in einem Kraftfahrzeug eine zusätzliche Funktion elektronisch gesteuert werden muss, kann gewünscht sein, wenn eine Zelle 3, 4, 5, 6 nachträglich an die Zellenkommunikationseinheit 11 angekoppelt wird oder wenn von vornherein eine bestimmte Anzahl von Zellen 3, 4, 5, 6 redundant in der Vorrichtung 1 vorgesehen sind, die nachträglich bei erhöhter Rechenleistung neu rekonfiguriert werden.

## Patentansprüche

1. Vorrichtung zum Steuern von Maschinen oder Verkehrsmitteln, mit mehreren über einen ersten Datenbus vernetzten Steuergeräten, jeweils mit einer Recheneinheit (2) zur Abarbeitung von Steuerprogrammen, mit Speichermitteln (8, 12, 13, 14) zur Speicherung von Daten bzw. Steuerprogrammen und mit einem Schnittstellenbaustein (9, 11,15), über den die Steuerbefehle an die zu steuernden Aktoren (15, 16) oder auch an die weiteren Steuergeräte übertragbar sind,
**dadurch gekennzeichnet, dass** mindestens eines der Steuergeräte (1) mehrere gleichartige Zellen (3, 4, 5, 6) aufweist, die als separate Elektronikelemente mit Zellenkommunikationseinheiten (11) ausgebildet sind und untereinander durch einen zweiten internen Datenbus (10) der Vorrichtung (1) vernetzt sind, wobei jede Zelle (3, 4, 5, 6) eine rekonfigurierbare Hardware (7) mit einer Vielzahl von vernetzten Speicherzellen, die über variabel schaltbare Verbindungsleitungen miteinander unterschiedlich verbindbar sind, sowie eine Zellenkommunikationseinheit (8, 9, 11) aufweist, und die rekonfigurierbare Hardware (7) jeder Zelle (3, 4, 5, 6) durch Konfigurationsdaten umkonfigurierbar ist, so dass jede Zelle (3, 4, 5, 6) für den Steuerprozess in Bezug auf deren Hardwarebeschaltung anpassbar ist und eine oder mehrere Zellen (3, 4, 5, 6) zusammen eine Recheneinheit (2) und/oder Peripheriebausteine (8, 9, 11) eines Steuergerätes (1) bilden, wobei weitere Zellen (3, 4, 5, 6) über eine Schnittstelle (11, 15) ankoppelbar oder nachträglich konfigurierbar sind, um die Rechenleistung des Steuergerätes (1) zu erhöhen.

2. Vorrichtung zum Steuern von Maschinen oder Verkehrsmitteln, mit mehreren über einen ersten Datenbus vernetzten Steuergeräten, jeweils mit einer Recheneinheit (2) zur Abarbeitung von Steuerprogrammen, mit Speichermitteln (8, 12, 13, 14) zur Speicherung von Daten bzw. Steuerprogrammen und mit einem Schnittstellenbaustein (9, 11,15), über den die Steuerbefehle an die zu steuernden Aktoren (15, 16) oder auch an die weiteren Steuergeräte übertragbar sind,
**dadurch gekennzeichnet, dass** mindestens eines der Steuergeräte (1) mehrere gleichartige Zellen (3, 4, 5, 6) aufweist, die als separate Elektronikelemente mit Zellenkommunikationseinheiten (11) ausgebildet sind und untereinander durch einen zweiten internen Datenbus (10) der Vorrichtung (1) vernetzt sind, wobei jede Zelle (3, 4, 5, 6) eine rekonfigurierbare Hardware (7) mit einer Vielzahl von vernetzten Speicherzellen, die über variabel schaltbare Verbindungsleitungen miteinander unterschiedlich verbindbar sind, sowie eine Zellenkommunikationseinheit (8, 9, 11) aufweist, und die rekonfigurierbare Hardware (7) jeder Zelle (3, 4, 5, 6) durch Konfigurationsdaten umkonfigurierbar ist, so dass jede Zelle (3, 4, 5, 6) für den Steuerprozess in Bezug auf deren Hardwarebeschaltung anpassbar ist und eine oder mehrere Zellen (3, 4, 5, 6) zusammen eine Recheneinheit (2) und/oder Peripheriebausteine (8, 9, 11) eines Steuergerätes (1) bilden, wobei die Zellen (3, 4, 5, 6) durch das Herunterladen einer Hardwarebeschreibungssprache konfigurierbar sind und jede Zelle (3, 4, 5, 6) eine Teilfunktion eines herkömmlichen Mikrokontrollers eines Steuergerätes nachbildet.

3. Vorrichtung nach Anspruch 1 oder 2, **dadurch gekennzeichnet, dass** die Vorrichtung (1) eine fest vorgegebene Anzahl der Zellen (3, 4, 5, 6) aufweist und durch die Konfigurationsdaten aus den Zellen (3, 4, 5, 6) eine Untermenge auswählbar und zur Bearbeitung der Steuerprozesse geeignet beschaltbar sind.

4. Vorrichtung nach einem der Ansprüche 1 bis 3, **dadurch gekennzeichnet, dass** die Konfigurationsdaten eine Hardwarebeschreibungssprache aufweisen, die eine Konfigurationsmöglichkeit für die rekonfigurierbare Hardware (7) beschreibt, und die über eine Schnittstelle (15) auf die Vorrichtung zum Steuern herunterladbar ist.

5. Vorrichtung nach einem der Ansprüche 1 bis 4, **dadurch gekennzeichnet, dass** in einem Speichermittel (12, 13, 14) mehrere Konfigurationsdatensätze ablegbar sind und die rekonfigurierbare Hardware (7) in Abhängigkeit von den Steuerprozessen konfigurierbar ist.

6. Vorrichtung nach Anspruch 1 oder 2, **dadurch gekennzeichnet, dass** mindestens eine der Zellen (3, 4, 5, 6) konfigurierbar ist, um Berechnungsfunktionen eines Mikrokontrollers zu übernehmen, so dass die Vorrichtung (1) den Mikrokontroller eines Steuergerätes ersetzen kann.

7. Vorrichtung nach einem der vorhergehenden Ansprüche, **dadurch gekennzeichnet, dass** bei einem höheren Rechenbedarf ein oder mehrere Zellen zusätzlich hinzugefügt und/oder aktiviert werden, die dann zusätzliche Rechenaufgaben abarbeiten können.

8. Vorrichtung nach einem der Ansprüche 1 bis 7, **dadurch gekennzeichnet, dass** die Vorrichtung durch Herunterladen einer Hardwarebeschreibungssprache entsprechend einem bestehenden Steuergerät konfigurierbar ist, so dass die Vorrichtung als Austauschsteuergerät einsetzbar ist.

9. Vorrichtung nach einem der Ansprüche 1 bis 8, **dadurch gekennzeichnet, dass** ein optischen Datenbus (10) zur Vernetzung der Zellen (3, 4, 5, 6) untereinander vorgesehen ist.

## Claims

1. Device for controlling machines or transport means, having a plurality of control units which are networked by means of a first data bus and each have a processor (2) for executing control programs, having memory means (8, 12, 13, 14) for storing data and control programs, and having an interface module (9, 11, 15) which can be used to transfer the control instructions to the actuators (15, 16) which are to be controlled or else to the further control units,
**characterized in that** at least one of the control units (1) has a plurality of cells (3, 4, 5, 6) of the same kind which are in the form of separate electronic elements having cell communication units (11) and are networked to one another by a second internal data bus (10) in the device (1), where each cell (3, 4, 5, 6) has a piece of reconfigurable hardware (7) having a multiplicity of networked memory cells, which can be connected to one another in different ways by means of variably switchable connecting lines, and also a cell communication unit (8, 9, 11), and the reconfigurable hardware (7) in each cell (3, 4, 5, 6) can be reconfigured by configuration data, so that each cell (3, 4, 5, 6) can be adjusted in terms of its hardware connections for the control process, and one or more cells (3, 4, 5, 6) together form a processor (2) and/or peripheral modules (8, 9, 11) in a control unit (1), with further cells (3, 4, 5, 6) being able to be interfaced or retrospectively configured using an interface (11, 15), in order to increase the processing power of the control unit (1).

2. Device for controlling machines or transport means, having a plurality of control units which are networked by means of a first data bus and each have a processor (2) for executing control programs, having memory means (8, 12, 13, 14) for storing data and control programs, and having an interface module (9, 11, 15) which can be used to transfer the control instructions to the actuators (15, 16) which are to be controlled or else to the further control units,
**characterized in that** at least one of the control units (1) has a plurality of cells (3, 4, 5, 6) of the same kind which are in the form of separate electronic elements having cell communication units (11) and are networked to one another by a second internal data bus (10) in the device (1), where each cell (3, 4, 5, 6) has a piece of reconfigurable hardware (7) having a multiplicity of networked memory cells, which can be connected to one another in different ways by means of variably switchable connecting lines, and also a cell communication unit (8, 9, 11), and the reconfigurable hardware (7) in each cell (3, 4, 5, 6) can be reconfigured by configuration data, so that each cell (3, 4, 5, 6) can be adjusted in terms of its hardware connections for the control process, and one or more cells (3, 4, 5, 6) together form a processor (2) and/or peripheral modules (8, 9, 11) in a control unit (1), with the cells (3, 4, 5, 6) being able to be configured by downloading a hardware description language, and each cell (3, 4, 5, 6) simulating a subfunction of a conventional microcontroller in a control unit.

3. Device according to Claim 1 or 2, **characterized in that** the device (1) has a firmly prescribed number of cells (3, 4, 5, 6), and the configuration data allow a subset to be selected from the cells (3, 4, 5, 6) and connected as appropriate for handling the control processes.

4. Device according to one of Claims 1 to 3, **characterized in that** the configuration data have a hardware description language which describes a configuration option for the reconfigurable hardware (7) and which can be downloaded via an interface (15) onto the device for control.

5. Device according to one of Claims 1 to 4, **characterized in that** a memory means (12, 13, 14) can store a plurality of configuration data records, and the reconfigurable hardware (7) can be configured on the basis of the control processes.

6. Device according to Claim 1 or 2, **characterized in that** at least one of the cells (3, 4, 5, 6) can be configured in order to perform computation functions of a microcontroller, so that the device (1) can replace the microcontroller in a control unit.

7. Device according to one of the preceding claims, **characterized in that** a higher processing requirement prompts one or more cells to be additionally added and/or activated which can then execute additional processing tasks.

8. Device according to one of Claims 1 to 7, **characterized in that** the device can be configured in line with an existing control unit by downloading a hardware description language, so that the device can be used as a replacement control unit.

9. Device according to one of Claims 1 to 8, **characterized in that** an optical data bus (10) is provided for networking the cells (3, 4, 5, 6) to one another.

## Revendications

1. Dispositif pour la commande de machines ou de moyens de transport, avec plusieurs appareils de commande connectés au moyen d'un premier bus de données, respectivement avec une unité de calcul (2) pour le traitement de programmes de commande, avec des moyens de stockage (8, 12, 13, 14) pour le stockage de données et/ou de programmes de commande et avec un module d'interface (9, 11, 15), par lequel les instructions de commande peuvent être transmises aux acteurs (15, 16) à commander ou également aux autres appareils de commande,
**caractérisé en ce que** au moins l'un des appareils de commande (1) présente plusieurs cellules (3, 4, 5, 6) similaires, qui sont conçues comme des éléments d'électronique séparés avec des unités de communication de cellule (11) et sont connectées entre elles par un second bus de données (10) interne du dispositif (1), chaque cellule (3, 4, 5, 6) présentant un matériel (7) reconfigurable avec une pluralité de cellules de mémoire connectées, qui peuvent être reliées différemment entre elles au moyen de lignes de liaison commutables de façon variable, et une unité de communication de cellule (8, 9, 11), et le hardware (7) reconfigurable de chaque cellule (3, 4, 5, 6) pouvant être reconfiguré par des données de configuration, de sorte que chaque cellule (3, 4, 5, 6) peut être adaptée pour le processus de commande par rapport à son câblage de hardware et qu'une ou plusieurs cellules (3, 4, 5, 6) forment ensemble une unité de calcul (2) et/ou des modules de périphérie (8, 9, 11) d'un appareil de commande (1), d'autres cellules (3, 4, 5, 6) pouvant être couplées au moyen d'une interface (11, 15) ou pouvant être configurées ultérieurement, afin d'augmenter la puissance de calcul de l'appareil de commande (1).

2. Dispositif pour la commande de machine ou de moyen de transport, avec plusieurs appareils de commande connectés au moyen d'un premier bus de données, respectivement avec une unité de calcul (2) pour le traitement de programmes de commande, avec des moyens de stockage (8, 12, 13, 14) pour le stockage de données et/ou de programmes de commande et avec un module d'interface (9, 11, 15), au moyen duquel les instructions de commande peuvent être transmises aux acteurs (15, 16) à commander ou également aux autres appareils de commande,
**caractérisé en ce qu'**au moins l'un des appareils de commande (1) présente plusieurs cellules (3, 4, 5, 6) similaires, qui sont conçues comme des éléments d'électronique séparés avec des unités de communication de cellule (11) et sont connectés entre elles au moyen d'un second bus de données (10) interne du dispositif (1), chaque cellule (3, 4, 5, 6) présentant un hardware (7) reconfigurable avec une pluralité de cellules de mémoire connectées, qui peuvent être reliées différemment entre elles au moyen de lignes de liaison commutables de façon radiale, et une unité de communication de cellules (8, 9, 11), et le hardware (7) reconfigurable de chaque cellule (3, 4, 5, 6) pouvant être reconfiguré par des données de configuration, de sorte que chaque cellule (3, 4, 5, 6) pour le processus de commande peut être adaptée par rapport à son câblage de hardware et qu'une ou plusieurs cellules (3, 4, 5, 6) forment ensemble une unité de calcul (2) et/ou des modules de périphérie (8, 9, 11) d'un appareil de commande (1), les cellules (3, 4, 5, 6) pouvant être configurées par le téléchargement d'un langage de description de hardware et chaque cellule (3, 4, 5, 6) simulant une fonction partielle d'un microcontrôleur classique d'un appareil de commande.

3. Dispositif selon la revendication 1 ou 2, **caractérisé en ce que** le dispositif (1) présente un nombre prédéfini de façon fixe de cellules (3, 4, 5, 6) et une sous-quantité peut être sélectionnée par les données de configuration à partir des cellules (3, 4, 5, 6) et peut être calculée de façon approprié pour le traitement des processus de commande.

4. Dispositif selon l'une quelconque des revendications de 1 à 3, **caractérisé en ce que** les données de configuration présentent un langage de description de hardware, qui décrit une possibilité de configuration pour le hardware (7) reconfigurable, et qui peut être téléchargé au moyen d'une interface (15) sur le dispositif pour la commande.

5. Dispositif selon l'une quelconque des revendications de 1 à 4, **caractérisé en ce que** plusieurs ensembles de données de configuration peuvent être déposés dans un moyen de stockage (12, 13, 14) et le hardware (7) reconfigurable peut être configuré en fonction des processus de commande.

6. Dispositif selon la revendication 1 ou 2, **caractérisé en ce qu'**au moins l'une des cellules (3, 4, 5, 6) est configurable, afin d'assumer des fonctions de calcul d'un microcontrôleur, de sorte que le dispositif (1) peut remplacer le microcontrôleur d'un appareil de commande.

7. Dispositif de commande selon l'une quelconque des revendications précédentes, **caractérisé en ce que**, dans le cas d'un besoin de calcul supérieur, une ou plusieurs cellules sont ajoutées en supplément et/ou activées, lesquelles peuvent traiter alors des tâches de calcul supplémentaires.

8. Dispositif de commande selon l'une quelconque des revendications 1 à 7, **caractérisé en ce que** le dispositif peut être configuré par téléchargement d'un langage de description de matériel de hardware en fonction d'un appareil de commande existant, de sorte que le dispositif peut être utilisé comme appareil de commande de remplacement

9. Dispositif de commande selon l'une quelconque des revendications 1 à 8, **caractérisé en ce qu'**un bus de données (10) optique est prévu pour la connexion des cellules (3, 4, 5, 6) entre elles.
